# EUROPÄISCHE PATENTSCHRIFT

(11) **EP 0 344 431 B1**
(45) Veröffentlichungstag und Bekanntmachung des Hinweises auf die Patenterteilung: **01.09.1993**
(21) Anmeldenummer: 89106232.5
(22) Anmeldetag: 08.04.1989
(51) Int. Cl.: F16N 13/04, F04B 21/02

(54) **Schmiermittelpumpe mit einer einstellbaren Dosiervorrichtung**
Lubrication pump with an adjustable proportioning device
Pompe de graissage avec un dispositif de dosage réglable

(30) Priorität: 03.06.1988 DE 3818802
(43) Veröffentlichungstag der Anmeldung: 06.12.1989
(73) Patentinhaber: BAIER & KÖPPEL GMBH & CO. Präzisionsapparate, D-91257 Pegnitz (DE)
(72) Erfinder: Büttner, Willibald, D-8575 Kirchenthumbach (DE)
(74) Vertreter: Richter, Bernhard, Dipl.-Ing.

(56) Entgegenhaltungen:
- GB-A- 444 493
- GB-A- 465 307
- US-A- 3 187 673

## Beschreibung

Die Erfindung betrifft eine Schmiermittelpumpe gemäß dem Oberbegriff des Anspruches 1. Dabei ist bevorzugt an Schmiermittelpumpen für die Zentralschmierung von Nutzfahrzeugen einschließlich Anhängern, Aufliegern, Sonderfahrzeugen und dergleichen gedacht. Das Schmiermittel kann verschiedener Art sein, einschließlich schwer zu verpressender Schmiermittel einer hohen Penetration. Eine Schmiermittelpumpe gemäß dem vorstehend angegebenen Oberbegriff des Anspruches 1 ist GB-A- 465 307 zu entnehmen. Hierbei kann durch Drehen an einer Verstellhandhabe eine Anlagefläche für einen Kolben, welcher ein Rückschlag Ventil trägt, in Richtung des Förderhubes des Förderkolbens verlagert werden. Hiermit verlagert sich der erstgenannte Kolben und bildet zwischen sich und dem Gehäuse der Pumpe im Anschluß an den Ansaugraum eine Reservekammer, deren Volumen von der Position der vorgenannten Anlagefläche abhängt. Da der Hub des Förderkolbens und damit die Größe des Ansaugraumes bei dieser Pumpe immer der gleiche bleibt und die Reservekammer je nach ihrem gebildeten Volumen einen entsprechend großen Anteil des mit einem Ansaughub geförderten Schmiermittels aufnimmt, so wird mit wachsender Größe der Reservekammer immer weniger an Schmiermittel gefördert. Hiermit soll die pro Förderhub dem Schmiermittelkreislauf zuzuführende Schmiermittelmenge eingestellt werden. Nachteilig ist dabei die relativ komplizierte Konstruktion und funktionell insbesondere die Gefahr von Lufteinschlüssen in der Reservekammer. Da diese Lufteinschlüsse dort keinen Ausweg haben, andererseits aber Lufteinschlüsse immer wieder bei derartigen Pumpen vorkommen, ist im Ergebnis hiermit keine sichere Einstellung der pro Hub zu fördernden Schmiermittelmenge zu erwarten. Denn die Luft wird aufgrund ihrer Kompressibilität in der Reservekammer zusammengedrückt, um dann in den Ansaugraum zwischen dem Förderkolben und dem das Ventil tragenden Kolben zu gelangen. Da das mit dem Ansaugraum für den Schmiermitteleintritt zur Verfügung gestellte Ansaugvolumen immer das gleiche ist, hierbei aber ein Teil dieses Raumes mit Luft gefüllt ist, ergibt sich die Konsequenz, daß dann zu wenig an Schmiermittel angesaugt wird. Außerdem ist bei der Schmiermittelpumpe nach GB-A- 465 307 nachteiligerweise ein weiteres Rückschlagventil zwischen dem Zwischenaufnahmeraum und dem Austritt der Pumpe zum Schmiermittelkreislauf gelegen. Dies verhindert den Durchtritt von versehentlich in die Schmiermittelpumpe gelangter Luft. Befindet sich versehentlich Luft zusammen mit Schmiermittel im Zwischenaufnahmeraum oder im Ansaugraum, so ist es nämlich aufgrund der komprimierten Luft schwierig, wenn nicht sogar unmöglich, durch den vom Förderkolben auf die Mischung aus Schmiermittel und komprimierter Luft ausgeübten Druck eine Öffnung des Rückschlagventiles zu bewirken. Auch bei anderen, ähnlichen Schmiermittelpumpen ist bisher ein Rückschlagventil in Förderrichtung des Schmiermittels betrachtet im Anschluß an den Zwischenaufnahmeraum unmittelbar vor dem Ausgang zum Schmiermittelkreislauf bzw. den Schmiermittelleitungen des zu schmierenden Systems vorgesehen. Auch dabei hat es sich als nachteilig ergeben, daß sich im Zwischenaufnahmeraum eine Mischung aus dem Schmiermittel und Luft bildete. Dies hatte zusätzlich zu dem o.g. Nachteil zur Folge, daß bei einem Hub des Förderkolbens der Luftanteil des im Zwischenaufnahmeraum vorhandenen Gemisches sich komprimierte, so daß nicht die gemäß Einstellung der Anordnung vorgesehene Menge an Schmiermittel den entsprechenden Schmierstellen zugeführt wurde, sondern nur ein Bruchteil davon. Die Abweichungen der wirklich dem Schmiermittelkreislauf zugeführten Schmiermittelmenge von der eingestellten Schmiermittelmenge wurden relativ um so größer, je kleiner die mittels der Stellanordnung eingestellte Schmiermittelmenge war. Das Ziel einer solchen Schmiermittelpumpe, nämlich eine hinreichend genaue Einstellung der mit jedem Förderkolbenhub dem Schmiermittelkreislauf zuzuführenden Schmiermittelmenge, wurde also nicht oder nur unvollkommen erreicht.

Die Aufgabe der Erfindung besteht demgegenüber darin, ausgehend von einer Schmiermittellpumpe gemäß dem Oberbegriff des Anspruches 1 dafür zu sorgen, daß die mit Hilfe der Stellanordnung eingestellte Fördermenge ziemlich genau, d.h. mit nur kleinen Mengenabweichungen pro Förderhub dem Schmiermittelkreislauf zugeführt wird, wobei schädliche Auswirkungen durch etwaige Lufteinschlüsse vermieden werden sollen.

Ausgehend von einer Schmiermittelpumpe mit Hubbetätigung eines Förderkolbens und mit einer einstellbaren Dosierung für die Menge des bei einem Pumpenhub geförderten Schmiermittels, wobei der von der Pumpe betätigte Förderkolben das Schmiermittel in einen Ansaugraum einsaugt, und die Einstellung der Schmiermittelfördermenge jedes Hubes durch Längsverlagerung eines den Ansaugraum in Förderrichtung des Schmiermittels begrenzenden Stellteiles erfolgt, wobei ferner das Schmiermittel aus diesem Ansaugraum über einen Zwischenaufnahmeraum dem Schmiermittelauslaß bzw. Schmiermittelkreislauf zugeführt wird, und wobei im vorgenannten Förderweg des Schmiermittels ein Rückschlagventil vorgesehen ist das in Förderrichtung des Schmiermittels betrachtet im Anschluß an den Ansaugraum und vor dem Zwischenaufnahmeraum angeordnet ist (Oberbegriff des Anspruches 1) wird die Erfindung darin gesehen, daß das Stellteil ein Stellkolben ist, der vom Rückschlagventil her in den Ansaugraum um dessen Volumen einzustellen hineinragt und in Längsrichtung des Ansaugraumes relativ zum Rückschlagventil verstellbar ist, daß der Stellkolben ferner zusammen mit dem Rückschlagventil parallel zur Förderrichtung des Schmiermittels und relativ zum Pumpengehäuse verschiebbar ist, und daß sich das Rückschlagventil im Bereich des Stellkolbens befindet, wobei das Rückschlagventil den Stellkolben umgibt und in seiner Schließstellung an einer den Stellkolben ebenfalls umgebenden Wandung oder Fläche des zugehörigen Gehäuses anliegt (Kennzeichen des Anspruches 1). Die erfindungsgemäße Anordnung ist baulich einfach und robust, sowie in der Funktion sicher. Dies ist eine wesentliche Verbesserung gegenüber der Schmiermittelpumpe nach GB-A- 465 307. Gegenüber den erwähnten weiteren, vorbekannten Schmiermittelpumpen ist kein ins Gewicht fallender konstruktiver bzw. fertigungstechnischer Mehraufwand erforderlich. Insbesondere wird ein Vorteil der Erfindung darin gesehen, daß Stellkolben und Rückschlagventil in baulich und fertigungstechnisch günstiger Weise zusammen placiert werden. Das Schmiermittel drückt auf die entsprechende Stirnfläche des Stellkolbens und bewegt diesen zusammen mit dem Rückschlagventil in die Offenstellung. Funktionell ist von Vorteil, daß der Stellkolben dabei in den Ansaugraum hineinragt und in dessen Längsrichtung relativ zum Rückschlagventil verstellbar ist. Damit ist eine sehr exakte Änderung des Volumens des Ansaugraumes erreichbar und damit eine entsprechend exakte Dosierung der pro Förderhub zu fördernden Schmiermittelmenge. Durch das Merkmal, daß das Rückschlagventil den Stellkolben umgibt, wird für das Rückschlagventil in seiner Schließstellung eine relativ große Dicht- und Anlagefläche an der Gegenfläche des Ventilsitzes am Pumpengehäuse erreicht und damit eine sichere Abdichtung erzielt. Die Gefahr von Lufteinschlüssen ist vermieden; zumindest gegenüber der vorbekannten Anordnung nach GB-A- 465 307 wesentlich verringert. Sollte dennoch etwas Luft in den Ansaugraum gelangen, so wird diese mit dem geförderten Schmiermittel bis zum Austritt in den Schmiermittelkreislauf weitergeleitet. Die Gefahr eines Verbleibens der Luft im Schmiermittelförderweg besteht nicht. Die Placierung des Rückschlagventiles an der angegebenen Stelle des Schmiermittelförderweges verhindert ein Eintreten von Luft in den Aufnahmezwischenraum, so daß dieser in jedem Stadium der Schmiermittelförderung bzw. der Pumpenbewegung mit dem Schmiermittel gefüllt ist, ohne daß sich die erläuterte nachteilige Mischung aus Schmiermittel und Luft bildet. Dies hat zur Folge, daß die Schmiermittelfördermenge jedes Hubes, welche mit Hilfe des Stellkolbens durch entsprechende Vergrößerung oder Verringerung des Ansaugraumes eingestellt wird, bei Verdrängung der entsprechenden Schmiermittelmenge aus dem Zwischenaufnahmeraum auch dem Schmiermittelkreislauf zugeführt wird.

Eine weitere, vorteilhafte bauliche Ausgestaltung ist Gegenstand des Anspruches 2. Gleiches gilt für die Gegenstände der Ansprüche 3 und 4.

Die Öffnung des Schmiermittelweges zwischen Ansaugraum und Zwischenaufnahmeraum erfolgt, wie erwähnt, beim Förderhub des Förderkolbens durch das im Ansaugraum befindliche Schmiermittel, welches den Stellkolben und damit das Rückschlagventil in Richtung zum Aufnahmezwischenraum hin öffnet. Gemäß einer weiteren vorteilhaften Ausführungsform der Erfindung gemäß Anspruch 5 wird die vorgenannte Öffnungsbewegung des Stellkolbens mit Rückschlagventil, die bereits aufgrund der Förderung des Schmiermittels erfolgt ist, unterstützt und hält den Durchgangsweg für das Schmiermittel im Bereich des Rückschlagventiles so lange offen, bis der Förderkolben wieder zurück bewegt wird.

Die Merkmale des Anspruches 6 unterstützen die problemlose Förderung des Schmiermittels vom Aufnahmezwischenraum in den Schmiermittelkreislauf, und zwar insbesondere dann, wenn sich im Schmiermittel noch Lufteinschlüsse befinden sollten, die dann über den Schmiermittelkreislauf letztlich ins Freie ausweichen können.

Auf den Inhalt der o.g. Unteransprüche wird ausdrücklich Bezug genommen.

Weitere Vorteile und Merkmale der Erfindung sind der nachfolgenden Beschreibung und der zugehörigen Zeichnung von erfindungsgemäßen Ausführungsmöglichkeiten zu entnehmen. In der Zeichnung zeigt:
- Fig. 1:: eine Schemadarstellung einer Schmiermittelpumpe mit Antrieb und
- Fig. 2:: in einem Schnitt gemäß der Linie II-II in Fig. 1 das Ausführungsbeispiel einer Anordnung nach der Erfindung im vergrößerten Maßstab.

Die Schmiermittelpumpe 1 mit Rührwerk 2 und Schmiermittelraum 3 wird von einem Elektromotor 4 angetrieben. Das von der Pumpe geförderte Schmiermittel gelangt über den Auslaß 5 in die Leitungen 6 des Schmiermittelkreislaufes.

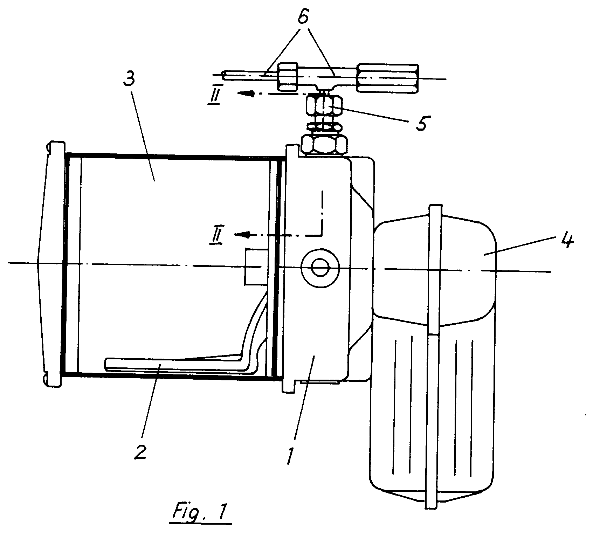

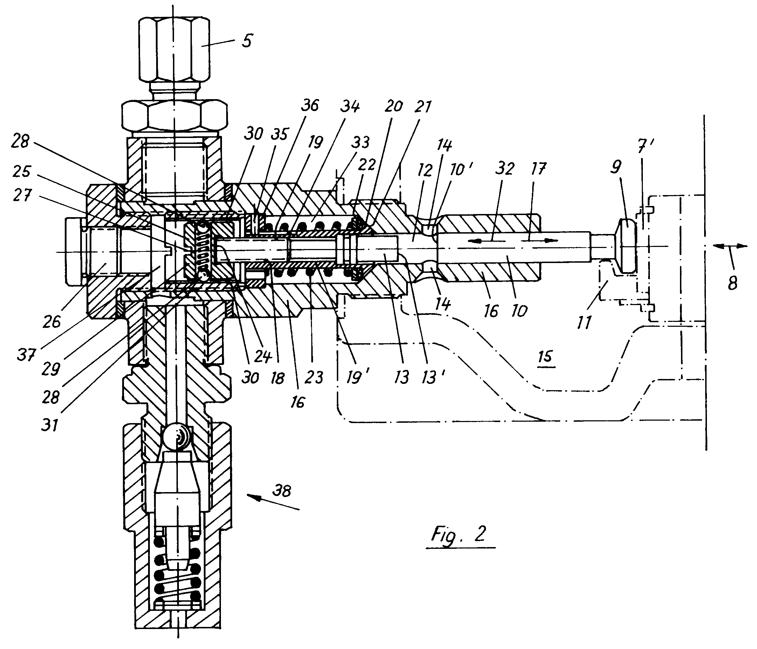

Der Schnitt gemäß Fig. 2 zeigt in einem gegenüber Fig. 1 vergrößerten Maßstab zunächst einen Exzenter 7' der Pumpe 1, welcher mit der Umdrehung der Pumpenwelle in der Pfeilrichtung 8 hin- und herbewegt wird und den Stößel 9 eines Förderkolbens entsprechend hin- und herbewegt. Die Hinbewegung erfolgt mittels der Stirnfläche 7' des Exzenters und die Rückbewegung mittels eines Mitnehmers 11,welcher den Stößel 9 hintergreift. Der Förderkolben 10 begrenzt mit seiner in Förderrichtung liegenden Stirnfläche 10' einen Ansaugraum 12, dessen gegenüberliegende Stirnfläche von der Stirnseite 13' eines noch näher zu erläuternden Stellkolbens 13 begrenzt wird. Durch eine Querbohrung 14 kann aus dem das Gehäuse 16 dieser Anordnung umgebenden Raum 15 Schmiermittel in den Ansaugraum 12 angesaugt werden. Dies erfolgt durch einen entsprechenden Rückwärtshub gemäß Pfeil 17 des Förderkolbens 10.

Der Stellkolben 13 greift mit einem Gewinde 18 in ein entsprechendes Gegengewinde 19 eines hohlzylindrischen Zapfens 19' ein, der mit seinem in Fig. 2 rechts gelegenen Ende 20, insbesondere dessen schrägen Stirnfläche 21 das Rückschlagventil bildet. Er liegt hiermit an einer entsprechenden Gegenfläche 22 des Gehäuses 16 unter der Druckkraft der Schraubenfeder 23 an. Der Stellkolben 13 ist mit seinem in Fig. 2 links gelegenen Ende 24 fest und zwar auf Drehmitnahme in einer Stellschraube 25 befestigt, welche durch eine Öffnung 26 hindurch durch Einsetzen des Schraubendrehers in den Schlitz 27 verdrehbar ist. Mit einem Verdrehen dieser Stellschraube ist der Stellkolben aufgrund des vorgenanntes Gewindeeingriffes 18, 19 relativ zum Rückschlagventil in Richtung des Doppelpfeiles 8 nach rechts bzw. links (bezogen auf Fig. 2) verschiebbar. Hierdurch ist der Abstand zwischen den beiden Stirnflächen 10' und 13' des Förderkolbens 10 und des Stellkolbens 13 und damit das Volumen des Ansaugraumes 12 auf die gewünschte Fördermenge an Schmiermittel pro Hub des Exzenters einstellbar.

Die Stellschraube 25 greift mit zwei Rastkugeln 28, die von einer Feder 29 nach außen gedrückt werden, in Längsnuten 30 einer Führungshülse 31 ein, die im Gehäuse 16 fixiert ist. So können z. B. vier dieser Längsnuten 30 jeweils um 90° versetzt, oder auch zwei dieser Längsnuten jeweils um 180° versetzt an der Innenfläche der Führungshülse 31 vorgesehen sein. Hiermit ist durch das Einrasten der Kugeln 28 in die Längsnuten der den Stellvorgang durchführenden Person ein Maß für die Veränderung des Volumens des Ansaugraumes 12 gegeben. Außerdem erlaubt die durch die Nuten 30 gegebene Längsführung des Teiles 31 in Richtung des Doppelpfeiles 8 ein entsprechendes Verschieben des Stellkolbens 13 aufgrund der Hubbewegung des Förderkolbens 10.

Eine Bewegung des Förderkolbens 10 in der Förderrichtung 32 drückt über das im Ansaugraum 12 befindliche Schmiermittel den Stellkolben 13 nach links. Dabei wird zugleich aufgrund der Gewindeverbindung 18, 19 das Rückschlagventil 20 nach links (Seitenangaben immer bezogen auf die Darstellung in Fig. 2) mitbewegt, wodurch zwischen deren Fläche 21 und der Gegenfläche 22 des Gehäuses 16 ein kreis ringförmigen Durchtrittsspalt für das Schmiermittel aus dem Ansaugraum 12 über das Rückschlagventil in den Zwischenaufnahmeraum 33 gebildet wird. Um diese Längsverschiebung des Rückschlagventiles zu ermöglichen, ist es mittels einer Längsführung 34, in die ein gehäusefester Stift 35 eines Widerlagers 36 eingreift, in der Richtung des Doppelpfeiles 8 hin- und herschiebbar.

Der vorgenannte Zwischenaufnahmeraum 33 umgibt etwa zylindrisch den Teil des Stellkolbens 13, der sich zwischen Rückschlagventil 20 und Stellschraube 25 befindet. Sobald der Zwischenaufnahmeraum 33 vollständig mit Schmiermittel gefüllt ist, wird dieses bei einem Förderhub des Förderkolbens 10 durch einen ringzylindrischen Spalt zwischen der Stellschraube 25 und der Führungshülse 31 hindurch in einen Raum 37 und von diesem nach oben (bezogen auf die Darstellung in Fig. 2) in Richtung zum Auslaß 5 gedrückt. Mit 38 ist allgemein das übliche Überdruckventil beziffert.

Wie bereits dargelegt ist der Aufnahmezwischenraum 33 beim Betrieb der Pumpe komplett mit dem Schmiermittel gefüllt. Dabei sind aufgrund des festen Abschlusses mittels des Rückschlagventiles 20, 21 zwischen diesem Raum 33 und dem Ansaugraum 12 Lufteinschlüsse im Aufnahmezwischenraum 33 vermieden. Die beim Förderhub durch den Schmiermitteldruck erfolgende Öffnung des Rückschlagventiles kann im weiteren Verlauf der Förderbewegung 32 des Förderkolbens 10 noch dadurch unterstützt werden, daß seine Stirnfläche 10' zur Anlage an die Stirnfläche 13' des Stellkolbens kommt und diesen um einen gewissen Weg nach links drückt. Die Größe dieses Weges hängt davon ab, wie weit der Stellkolben mittels der Stellmutter in Fig. 2 nach recht bewegt wurde. Dabei wird vom Förderkolben die Offenstellung des Rückschlagventiles so lange beibehalten, bis der Förderkolben 10 durch den Exzenter in die Gegenrichtung (Ansaugrichtung) 17 nach rechts zurückgeholt wird. Beim nächsten Hub des Exzenters und damit Bewegen des Förderkolbens 10 nach links (Pfeil 32) wird wiederum die gleiche, durch Einstellung der Größe des Raumes 12 dosierte Menge an Schmiermittel dem Schmiermittelkreislauf zugeführt und so fort.

## Patentansprüche

1. Schmiermittelpumpe mit Hubbetätigung (7') eines Förderkolbens (10) und mit einer einstellbaren Dosierung für die Menge des bei einem Pumpenhub geförderten Schmiermittels, wobei der von der Pumpe betätigte Förderkolben (10) das Schmiermittel in einen Ansaugraum (12) einsaugt, und die Einstellung der Schmiermittelfördermenge jedes Hubes durch Längsverlagerung eines den Ansaugraum in Förderrichtung des Schmiermittels begrenzenden Stellteiles (13) erfolgt, wobei ferner das Schmiermittel aus diesem Ansaugraum über einen Zwischenaufnahmeraum (33) dem Schmiermittelauslaß (5) bzw. Schmiermittelkreislauf zugeführt wird, und wobei im vorgenannten Förderweg des Schmiermittels ein Rückschlagventil (20) vorgesehen ist, das in Förderrichtung (32) des Schmiermittels betrachtet im Anschluß an den Ansaugraum (12) und vor dem Zwischenaufnahmeraum (33) angeordnet ist, dadurch gekennzeichnet, daß das Stellteil ein Stellkolben (13) ist, der vom Rückschlagventil (20) her in den Ansaugraum (12) um dessen Volumen einzustellen hineinragt und dazu in Längsrichtung des Ansaugraumes relativ zum Rückschlagventil (20) verstellbar ist, daß der Stellkolben (13) ferner zusammen mit dem Rückschlagventil parallel zur Förderrichtung des Schmiermittels und relativ zum Pumpengehäuse (16) verschiebbar ist, und daß sich das Rückschlagventil (20) im Bereich des Stellkolbens (13) befindet, wobei das Rückschlagventil (20) den Stellkolben (13) umgibt und in seiner Schließstellung an einer den Stellkolben ebenfalls umgebenden Wandung oder Fläche (22) des zugehörigen Gehäuses (16) anliegt (21).

2. Schmiermittelpumpe nach Anspruch 1, dadurch gekennzeichnet, daß der Stellkolben (13) mit einem Gewinde (18) in ein Gegengewinde (19) des Rückschlagventiles (20) eingreift, wobei eine von außen zugängige und verdrehbare Stellschraube (25) mit dem Stellkolben (13) auf Drehmitnahme verbunden ist.

3. Schmiermittelpumpe nach Anspruch 2, dadurch gekennzeichnet, daß eine Druckfeder (23) sich einerseits am Gehäuse (16) bzw. einem Widerlager (36) dieses Gehäuses und andererseits am Rückschlagventil (20) abstützt, wobei die Feder das Rückschlagventil in seine Schließstellung drückt.

4. Schmiermittelpumpe nach einem der Ansprüche 1 bis 3, dadurch gekennzeichnet, daß der Zwischenaufnahmeraum (33) etwa ringzylindrisch ausgebildet ist und den Teil des Stellkolbens (13) umgibt, der sich zwischen Rückschlagventil (20) und Stellschraube (25) befindet.

5. Schmiermittelpumpe nach einem der Ansprüche 1 bis 4, dadurch gekennzeichnet, daß die einander zugewandten, den Ansaugraum (12) jeweils stirnseitig begrenzenden Stirnflächen (10', 13') des Förderkolbens (10) und des Stellkolbens (13) so positioniert sind, daß der Förderkolben in der Endphase seiner Vorschubbewegung (32) zur Anlage an den Stellkolben kommt und diesen unter Mitnahme des Rückschlagventiles in der Förderrichtung des Schmiermittels gegen die Wirkung der Feder (23) verschiebt.

6. Schmiermittelpumpe nach einem der Ansprüche 1 bis 5, dadurch gekennzeichnet, daß der Zwischenaufnahmeraum (33) über ventillose Förderwege des Schmiermittels mit dem Auslaß (5) in Verbindung steht.

## Claims

1. Lubricant pump with stroke actuation (7') of a conveying piston (10) and with an adjustable metering for the quantity of the lubricant conveyed in one pump stroke, wherein the conveying piston (10) actuated by the pump sucks the lubricant into a suction space (12), and the adjusting of the lubricant conveyed quantity of each stroke takes place through longitudinal displacement of a setting member (13) bounding the suction space in conveying direction of the lubricant, wherein moreover the lubricant is conducted out of this suction space by way of an intermediate receiving space (33) to the lubricant outlet (5) or lubricant circuit, and wherein provided in the aforesaid conveying path of the lubricant is a non-return valve (20) which is arranged, seen in conveying direction (32) of the lubricant, following on from the suction space (12) and in front of the intermediate receiving space (33), characterised thereby that the setting member is a setting piston (13), which projects from the non-return valve (20) into the suction space (12) in order to adjust the volume thereof and is displaceable for this purpose in longitudinal direction of the suction space relative to the non-return valve (20), that the setting piston (13) moreover is displaceable together with the non-return valve parallel to the conveying direction of the lubricant and relative to the pump housing (16), and that the non-return valve (20) is disposed in the region of the setting piston (13), wherein the non-return valve (20) surrounds the setting piston (13) and in its closing setting bears (21) against a wall or surface (22), which likewise surrounds the setting piston, of the associated housing (16).

2. Lubricant pump according to claim 1, characterised thereby that the setting piston (13) engages by a thread (18) in a counterthread (19) of the non-return valve (20), wherein an externally accessible and rotatable setting screw (25) is connected with the setting piston (13) on rotational entrainment.

3. Lubricant pump according to claim 2, characterised thereby that a compression spring (23) is supported at one end at the housing (16) or at a counterbearing (36) of this housing and at the other end at the non-return valve (20), wherein the spring presses the non-return valve into its closing setting.

4. Lubricant pump according to one of claims 1 to 3, characterised thereby that the intermediate receiving space (33) is constructed to be approximately annularly cylindrical and surrounds the part of the setting piston (13) which is disposed between the non-return valve (20) and the setting screw (25).

5. Lubricant pump according to one of claims 1 to 4, characterised thereby that the mutually facing end surfaces (10', 13'), which bound the suction space (12) each time at the ends, of the conveying piston (10) and of the setting piston (13) are so positioned that the conveying piston in the end phase of its advance movement (32) comes to bear against the setting piston and displaces this, with entrainment of the non-return valve, in the conveying direction of the lubricant against the effect of the spring (23).

6. Lubricant pump according to one of claims 1 to 5, characterised thereby that the intermediate receiving space (33) stands in connection with the outlet (5) by way of an unvalved conveying path of the lubricant.

## Revendications

1. Pompe de graissage avec mouvement de va-et-vient (7') d'un piston d'alimentation (10) et un dispositif de dosage réglable pour doser la quantité de lubrifiant déplacée par une course du piston, le piston d'àlimentation (10) actionné par la pompe aspirant le lubrifiant dans une chambre d'admission (12) et le réglage de la quantité de lubrifiant déplacée par chaque course s'effectuant par le déplacement longitudinal d'un organe de réglage (13) limitant la chambre d'admission dans le sens de déplacement du lubrifiant, le lubrifiant étant, en outre, acheminé à partir de cette chambre d'admission vers la sortie de graissage (5) ou dans le circuit de graissage à travers une chambre d'admission intermédiaire (33), et un clapet anti-retour (20) disposé, par rapport au sens de déplacement (32) du lubrifiant, à la suite de la chambre d'admission (12) et devant la chambre d'admission intermédiaire (33), étant prévu sur le trajet du lubrifiant cité précédemment, caractérisée en ce que l'organe de réglage est un piston de réglage (13) faisant saillie du clapet anti-retour (20) dans la chambre d'admission (12) pour en régler le volume et pouvant être déplacé, à cet effet, le long de la chambre d'admission par rapport au clapet anti-retour, en ce que, en outre, le piston de réglage (13) peut être déplacé par rapport au carter de la pompe (16) et parallèlement au sens de déplacement du lubrifiant en même temps que le clapet anti-retour, et en ce que le clapet anti-retour (20) se trouve dans la zone du piston de réglage (13), le clapet anti-retour (20) entourant le piston de réglage (13) et venant se placer, en position fermée en (21), contre l'une des parois ou surfaces (22) du carter (16) entourant également le piston de réglage (13).

2. Pompe de graissage selon la revendication 1, caractérisée en ce que le piston de réglage (13) s'engrène avec un filetage (18) dans un taraudage (19) du clapet anti-retour (20), une vis de réglage (25) rotative accessible de l'extérieur étant reliée au piston de réglage (13) de manière solidaire en rotation.

3. Pompe de graissage selon la revendication 2, caractérisée en ce qu'un ressort à pression (23) prend appui, d'une part, sur le carter (16) ou sur une butée (36) de ce carter et, d'autre part, sur le clapet anti-retour (20), le ressort poussant le clapet anti-retour en position fermée.

4. Pompe de graissage selon l'une des revendications 1 à 3, caractérisée en ce que la chambre d'admission intermédiaire (33) est réalisée de manière approximativement cylindrique et annulaire, et entoure la partie du piston de réglage (13) qui se situe entre le clapet anti-retour (20) et la vis de réglage (25).

5. Pompe de graissage selon l'une des revendications 1 à 4, caractérisée en ce que les surfaces frontales (10', 13') du piston d'alimentation (10) et du piston de réglage (13) qui se font face et qui délimitent la chambre d'admission sur chacun de ses fronts sont positionnées de telle manière, que le piston d'alimentation (10) touche, dans sa phase terminale d'avancement (32), le piston de réglage et le déplace en entraînant en même temps le clapet anti-retour dans le sens de déplacement du lubrifiant, contre l'action du ressort (23).

6. Pompe de graissage selon l'une des revendications 1 à 5, caractérisée en ce que la chambre d'admission intermédiaire (33) est reliée à la sortie (5) par le biais de trajets de déplacement du lubrifiant ne comportant pas de soupape.
